# EUROPÄISCHE PATENTSCHRIFT

(11) **EP 1 582 793 B1**
(45) Veröffentlichungstag und Bekanntmachung des Hinweises auf die Patenterteilung: **15.08.2007**
(21) Anmeldenummer: 05102490.9
(22) Anmeldetag: 30.03.2005
(51) Int. Cl.: F16K 31/06

(54) **Elektropneumatisches Ventil**
Electro-pneumatic valve
Vanne électropneumatique

(30) Priorität: 31.03.2004 DE 102004015661
(43) Veröffentlichungstag der Anmeldung: 05.10.2005
(73) Patentinhaber: Bosch Rexroth AG, 70184 Stuttgart (DE)
(72) Erfinder: Widera, Jörg, 70839, Gerlingen (DE)
(74) Vertreter: Kietzmann, Lutz

(56) Entgegenhaltungen:
- DE-B- 1 272 664
- DE-U1- 20 120 608
- GB-A- 1 201 161
- US-A- 5 518 029
- US-B1- 6 273 396

## Beschreibung

Die Erfindung betrifft ein elektropneumatisches Ventil, insbesondere ein Vorsteuerventil für ein pneumatisches Wegeventil, gemäss dem Oberbegriff von Anspruch 1.

Neben herkömmlichen elektropneumatischen Vorsteuerventilen, welche einen von der elektrischen Spule umschlossenen längsbeweglichen Anker aufweisen, eignen sich die hier interessierenden Vorsteuerventile mit stirnseitig der Spule angeordneten Plattenanker insbesondere für eine reibungsarme Betätigung des den Ventilsitz öffnenden oder schließenden Verschlusselements.

Prinzipiell wird ein elektropneumatisches Vorsteuerventil im Rahmen der Vorsteuerung eines pneumatischen Wegeventils eingesetzt. Zum Antrieb des meist als Ventilschieber ausgebildeten Ventilglieds eines pneumatischen Wegeventils liefert das Vorsteuerventil den erforderlichen Steuerdruck. Ein Ventilschieber wird beispielsweise mit dem stirnseitig auf diesen einwirkenden Steuerdruck in eine Axialrichtung verstellt. Die Rückstellung in die andere Axialrichtung erfolgt entweder über eine Rückstellfeder (monostabiles Wegeventil) oder über eine zweite Steuerkammer (bistabiles Wegeventil).

Ein elektropneumatisches Ventil mit den im Oberbegriff von Anspruch 1 definierten Merkmalen ist aus der GB-A-1 201 161 bekannt.

Aus der DE 201 20 608 U1 ist ein weiteres gattungsgemäßes elektropneumatisches Vorsteuerventil mit einem Plattenanker bekannt. Das Vorsteuerventil weist ein zylindrisches Gehäuse auf, was eine elektrische Spule umschließt. Zur Verstärkung des in Folge einer Bestromung der elektrischen Spule erzeugten Magnetfelds ist diese mit einem koaxialen Eisenkern ausgestattet. Dieser wirkt mit einem stirnseitig der Spule in Hubrichtung bewegbar angeordneten Plattenanker zusammen. Der Plattenanker wird über eine Flachfeder - hier nach Art eines Federblechs - geführt und in der Ausgangsposition gehalten, in welcher ein fest am Plattenanker angebrachtes Verschlusselement aus einem Elastomermaterial an einem Ventilsitz zur Anlage kommt, so dass dieser geschlossen ist. In Folge Bestromung der elektrischen Spule bewegt sich der Plattenanker ausgehend von dieser Ausgangsstellung in eine Betätigungsstellung, in welcher der Plattenanker am Eisenkern der elektrischen Spule zur Anlage kommt. Hierbei wird das fest am Plattenanker gegenüberliegend befestigte Verschlusselement vom Ventilsitz abgehoben, so dass die Offenstellung eingenommen wird. Ist die elektrische Spule stromlos, so bewegt sich der Plattenanker mit dem elastomeren Verschlusselement aufgrund der Rückstellkraft der Flachfeder wieder in die vorstehend beschriebene Ausgangsstellung zurück.

Durch das Plattenankerprinzip, bei welchem der stirnseitige Plattenanker allein durch die Flachfeder gehalten und geführt wird, kann die Betätigung des Ventilsitzes besonders reibungsarm erfolgen. Damit jedoch eine zuverlässige Dichtwirkung zwischen dem Dichtsitz und dem Verschlusselement erzielt wird, ist es beim bekannten Ventil erforderlich, dass das Verschlusselement aus einem Elastomermaterial besteht. Bestünde das Verschlusselement bei dem bekannten Ventil aus einem demgegenüber harten Material - wie Metall, Kunststoff, oder dergleichen - dann würde das Problem auftreten, dass die rückstellende Flachfeder allein nicht die Kraft aufbringen könnte, welche erforderlich wäre, um das Verschlusselement ohne Spalt druckdicht abdeckend auf den Ventilsitz zu bringen. Daher ist es bei dem Vorsteuerventil des Standes der Technik unerlässlich, ein Verschlusselement aus einem Elastomermaterial einzusetzen, welches einer solchen Spaltbildung aufgrund der Elastizität und dem damit einhergehenden Toleranzausgleich entgegenwirkt. Jedoch unterliegt das elastomere Verschlusselement in Folge der vielen während des Betriebs auftretenden Wechselbeanspruchungen mit dem ringförmig hieran zur Anlage kommenden Ventilsitz einem Verschleiß, so dass das Vorsteuerventil im Laufe der Zeit nicht mehr zuverlässig dichtend schaltet. Im Extremfall kann es hierdurch zu Fehlschaltungen des vom Vorsteuerventil angesteuerten Wegeventils kommen.

Es ist daher die Aufgabe der vorliegenden Erfindung, ein elektropneumatisches Vorsteuerventil mit einem reibungsarmen Plattenanker zu schaffen, dass selbst über eine lange Betriebsdauer zuverlässig dichtend schaltet.

Die Aufgabe wird ausgehend von einem elektropneumatischen Ventil gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass das mit dem Ventilsitz zusammenwirkende Verschlusselement als ein separates Bauteil ausgeführt ist, das zur Hubbetätigung in Axialrichtung am Flachanker anliegt und unter einem Radialspiel gegenüber diesem bewegbar ist, und dessen Führung entlang des Hubes zwischen der Offen- und der Schließstellung über ein formschlüssiges Zusammenwirken mit dem mindestens einen Ventilsitz erfolgt.

Der Vorteil der erfindungsgemäßen Lösung liegt insbesondere darin, dass sowohl die Ventilsitze als auch das Verschlusselement aus einem harten Material - wie Metall, Kunststoff und dergleichen - gebildet werden kann. Denn die erfindungsgemäße Bauteilanordnung lässt wegen der unabhängigen Bewegbarkeit des Verschlusselements gegenüber dem Plattenanker eine Spaltbildung zwischen dem Verschlusselement und dem korrespondierenden Ventilsitz nicht aufkommen. Somit braucht zur Ausbildung des Verschlusselement nicht auf ein verschleißbehaftetes Elastomermaterial zurückgegriffen werden.

Vorzugsweise bestehen die Ventilsitze - oder der die Ventilsitze bildende Bereich des Gehäuses - sowie das Verschlusselement aus gehärtetem Stahl. Dieses Material ist bei der vorliegenden Anwendung als Schaltglied eines Druckluftstroms verschleißfrei. Es ist jedoch auch denkbar, Ventilsitz und Verschlusselement aus einem anderen geeigneten harten Material - wie vorstehend erwähnt - auszubilden.

Erfindungsgemäß lässt sich in einfacher Weise ein 3/2-Wegeventil aufbauen, in dem genau zwei Ventilsitze vorgesehen sind, welche koaxial einander gegenüberliegend angeordnet sind, wobei der eine Ventilsitz zur Entlüftung am mit einem korrespondierenden Entlüftungskanal versehenden Eisenkern ausgebildet ist, und der andere Ventilsitz zur Belüftung am Gehäuse ausgebildet ist.

Bei dem 3/2-Wegeventils kann der Ventilsitz zur Entlüftung vorteilhafterweise als separates Bauteil gefertigt sein und koaxial stirnseitig in den Eisenkern eingepresst werden. Somit lässt sich ein magnetisch wirksamer Eisenkern aus Weicheisen kombinieren mit einem aus einem gehärteten Stahl bestehenden verschleißfreien Ventilsitz.

Gemäß einer anderen die Erfindung verbessernden Maßnahme besitzen beide Ventilsitze des 3/2-Wegeventils eine sich zum Belüftungs- bzw. Entlüftungskanal verjüngende kegelstumpfartige Form, um je mit einem konvexen Bereich des Verschlusselements zur Führung entlang des Hubes zwischen der Offen- und der Schließstellung formschlüssig zusammenzuwirken. Durch diese besondere Formgebung wird eine einfache Führung des separaten Verschlusselements innerhalb des Vorsteuerventils realisiert, wobei das für die Dichtheit im Zusammenhang mit dem kegelstumpfartigen Ventilsitz erforderliche Radialspiel und das für den erforderlichen Öffnungshub erforderliche Axialspiel erhalten bleibt.

Der konvexe, mit dem kegelstumpfartigen Ventilsitz zusammenwirkende Bereich des Verschlusselements wird vorzugsweise durch ein in das Verschlusselement teilweise eingepresstes Kugelelement hergestellt. Neben dieser fertigungstechnisch einfach umzusetzenden Lösung ist es jedoch auch denkbar, Kugelelemente durch eine käfigartige Ausnehmung im Verschlusselement unter Bildung des konvexen Bereichs zu umschließen. Das hierbei entstehende Spiel zwischen dem käfigbildenden Verschlusselement und dem Kugelelement trägt zur Verbesserung der Dichtpaarung zum Ventilsitz bei.

Gemäß einer weiteren die Erfindung verbessernden Maßnahme ist vorgesehen, dass die Flachfeder eine sternartige Gestalt mit mindestens drei Federarmen aufweist und mit einem mittleren Durchbruch für einen mit dem Eisenkern zusammenwirkenden Bereich des Flachankers versehen ist. Diese Maßnahme gestattet eine Herstellung der Flachfeder als Stanzteil aus einem herkömmlichen Federblech. Um eine optimale Rückstellkraft bei gleichzeitig hinreichender Elastizität der Flachfeder sicherzustellen, weist diese vorzugsweise genau vier Federarme auf, deren distalen Enden in korrespondierende Ausnehmungen seitens des Gehäuses eingelegt sind, welche der Dicke der Flachfeder entsprechen. Auf diese Art kann sichergestellt werden, dass dem magnetischen Fluss keine weiteren Widerstände entgegengesetzt werden.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig.1: einen Längsschnitt durch ein Vorsteuerventil für ein pneumatisches Wegeventil, und
- Fig.2: eine Draufsicht auf eine bei dem Vorsteuerventil gemäß Fig.1 eingesetzte Flachfeder zur Rückstellung eines Plattenankers.

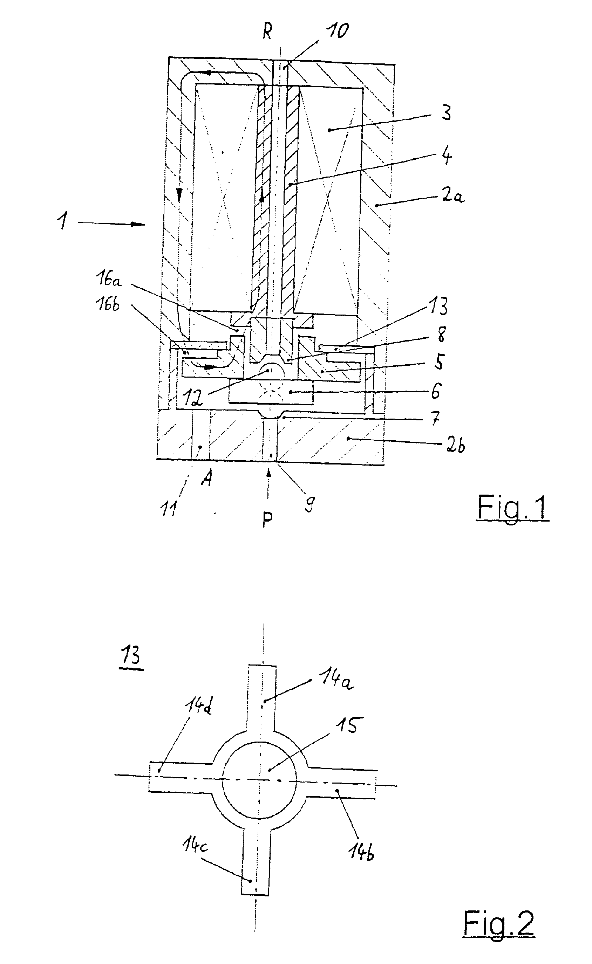

Gemäß Fig.1 weist das Vorsteuerventil für ein pneumatisches Wegeventil ein Gehäuse 1 auf, welches aus zwei Gehäuseteilen 2a und 2b zusammengesetzt ist. Das obere Gehäuseteil 2a umschließt eine elektrische Spule 3, die mit einem zentralen Eisenkern 4 versehen ist. Stirnseitig der elektrischen Spule 3 und des Eisenkerns 4 befindet sich ein innerhalb eines Innenraums des Gehäuses 1 beweglich angeordneter Plattenanker 5. Der Plattenanker 5 dient einer elektromagnetischen Hubbetätigung eines als separates Bauteil ausgeführten Verschlusselements 6. Das Verschlusselement 6 ist wegen seiner getrennten Anordnung zum Plattenanker 5 unter einem Radialspiel gegenüber diesem bewegbar und wirkt wechselseitig auf zwei einander gegenüberliegend angeordneten Ventilsitze 7 und 8.

Der Ventilsitz 7 ist über einem Belüftungskanal 9 mit dem Speisedruckanschluss P des Vorsteuerventils verbunden, wogegen der andere Ventilsitz 8 über einen Entlüftungskanal 10 mit einem Entlüftungsanschluss R des Vorsteuerventils in Verbindung steht. Der Entlüftungskanal 10 erstreckt sich durch den Eisenkern 4 der Spule hindurch, wobei der Ventilsitz 8 zur Entlüftung als separates Bauteil koaxial stirnseitig in den Eisenkern 4 eingepresst ist.

Das derart aufgebaute 3/2-Wegeventil ist in der unbetätigten, d.h. unbestromten Ausgangsstellung abgebildet, in welcher eine ortsfest zum Ventilgehäuse 1 im Gehäuseinnenraum angeordnete Flachfeder den Plattenanker 5 samt benachbartem Verschlusselement 8 auf den Ventilsitz 7 zur Belüftung drückt. In Folge dessen ist ein benachbart zum Speisedruckanschluss P am Gehäuse 1 angeordneter Arbeitsanschluss A mittels Arbeitskanal 11 über den Innenraum des Gehäuses 1 und dem offenen Ventilsitz 8 zur Entlüftung mit dem Entlüftungsanschluss R verbunden. Eine Dichtheit zwischen dem Ventilsitz 7 zur Belüftung und dem Verschlusselement 6 wird durch die sich verjüngende kegelstumpfartige Form der Ventilsitze 7 und 8 in Verbindung mit einem hieran zur Anlage kommenden konvexen Bereich des Verschlusselements 6 erreicht. Die einander gegenüberliegenden kegelstumpfartig sich verjüngenden Ventilsitze 7 und 8 bilden eine Führung des Verschlusselements 6 entlang des Hubes zwischen der Offen- und der Schließstellung. Der konvexe Bereich des Verschlusselements 6 wird in diesem Ausführungsbeispiel durch zwei in das Verschlusselement 6 fest eingepresste Kugelelemente 12 gebildet.

In Folge Bestromung der elektrischen Spule 3 wird der Plattenanker 5 den Luftspalt 16a sowie den Luftspalt 16b überwindend an den Eisenkern 4 gezogen. Durch den über den Speisedruckanschluss P am Verschlusselement 6 anstehenden Speisedruck bewegt sich das Verschlusselement 6 in Richtung des Ventilsitzes 8 zur Entlüftung, welcher somit geschlossen wird. Über den nun geöffneten Ventilsitz 7 zur Belüftung erfolgt eine Beaufschlagung des Arbeitsanschlusses A via Arbeitskanal 11 mit Speisedruck. Die besagte Bewegung des Verschlusselements 6 erfolgt unter Überwindung der Rückstellkraft der Flachfeder 13.

Nach Fig.2 weist die sternartig ausgebildete Flachfeder 13 insgesamt vier äquidistant voneinander angeordnete Federarme 14a-14d auf. Weiterhin ist ein zentraler Durchbruch 15 für einen mit dem - hier nicht weiter dargestellten - Eisenkern 4 zusammenwirkenden Bereich des - ebenfalls nicht weiter dargestellten - Plattenankers 5 vorgesehen. Über die distalen Enden der Federarme 14a-14d erfolgt eine Einspannung der Flachfeder 13 in das Gehäuse 1 des elektropneumatischen Vorsteuerventils.

### Bezugszeichenliste

- **1**: Gehäuse
- **2**: Gehäuseteil
- **3**: Elektrische Spule
- **4**: Eisenkern
- **5**: Plattenanker
- **6**: Verschlusselement
- **7**: Ventilsitz (Belüftung)
- **8**: Ventilsitz (Entlüftung)
- **9**: Belüftungskanal
- **10**: Entlüftungskanal
- **11**: Arbeitskanal
- **12**: Kugelelement
- **13**: Flachfeder
- **14**: Federarm
- **15**: Durchbruch
- **16**: Luftspalt

## Patentansprüche

1. Elektropneumatisches Ventil, insbesondere ein Vorsteuerventil für ein pneumatisches Wegeventil, mit einer in einem Gehäuse (1) untergebrachten elektrischen Spule (3) mit einem Eisenkern (4), welche stirnseitig mit einem über eine Flachfeder (13) rückstellbaren Plattenanker (5) zur elektromagnetischen Hubbetätigung mindestens eines Verschlusselements (6) zusammenwirkt, das zwischen zwei koaxial einander gegenüberliegend angeordneten Ventilsitzen (7, 8) zur Bildung eines 3/2-Wegeventils angeordnet ist, wobei der eine Ventilsitz (8) zur Entlüftung am mit einem korrespondierenden Entlüftungskanal (10) versehenen Eisenkern (4) ausgebildet ist, und der andere Ventilsitz (7) zur Belüftung am Gehäuse (1) ausgebildet ist, wobei die Ventilsitze (7, 8) und das Verschlusselement (6) aus einem harten Material bestehen, und wobei das mit den Ventilsitzen (7, 8) zusammenwirkende Verschlusselement (6) als ein separates Bauteil ausgeführt ist und unter einem Radialspiel gegenüber dem Plattenanker (5) bewegbar ist,
**dadurch gekennzeichnet, dass** das Verschlusselement (6) zur Hubbetätigung in Axialrichtung stirnseitig am Plattenanker (5) anliegt und die Führung des Verschlusselements (6) entlang des Hubes zwischen der Offen- und der Schließstellung allein über ein formschlüssiges Zusammenwirken mit beiden Ventilsitzen (7,8) erfolgt.

2. Elektropneumatisches Ventil nach Anspruch 1,
**dadurch gekennzeichnet, dass** die Ventilsitze (7, 8) und das Verschlusselement (6) aus gehärtetem Stahl bestehen.

3. Elektropneumatisches Ventil nach Anspruch 2,
**dadurch gekennzeichnet, dass** der Ventilsitz (8) zur Entlüftung als separates Bauteil koaxial stirnseitig in den Eisenkern (4) eingepresst ist.

4. Elektropneumatisches Ventil nach Anspruch 2,
**dadurch gekennzeichnet, dass** beide Ventilsitze (7, 8) eine sich zum Belüftungs- bzw. Entlüftungskanal (10) verjüngende kegelstumpfartige Form besitzen und je mit einem konvexen Bereich des Verschlusselements (6) zur Führung entlang des Hubes zwischen der Offen- und der Schließstellung formschlüssig zusammenwirken.

5. Elektropneumatisches Ventil nach Anspruch 4,
**dadurch gekennzeichnet, dass** der konvexe Bereich des Verschlusselements (6) durch zwei teilweise hierin eingepresste gegenüberliegende Kugelelemente (1, 2) gebildet ist.

6. Elektropneumatisches Ventil nach Anspruch 4,
**dadurch gekennzeichnet, dass** der konvexe Bereich des Verschlusselements (6) durch von einer käfigartigen Ausnehmung teilweise umschlossene Kugelelemente gebildet ist.

7. Elektropneumatisches Ventil nach einem der vorstehenden Ansprüche,
**dadurch gekennzeichnet, dass** die Flachfeder (13) eine stemartige Gestalt mit mindestens drei Federarmen (14a-14d) aufweist und mit einem mittleren Durchbruch (15) für einen mit dem Eisenkern (4) zusammenwirkenden Bereich des Plattenankers (5) versehen ist.

8. Elektropneumatisches Ventil nach Anspruch 7,
**dadurch gekennzeichnet, dass** die Flachfeder (13) genau vier Federarme (14a-14d) aufweist.

9. Elektropneumatisches Ventil nach Anspruch 7 oder 8,
**dadurch gekennzeichnet, dass** die distalen Enden der Federarme (14a-14d) in korrespondierende Ausnehmungen seitens des Gehäuses (1) eingelegt sind, die der Dicke der Flachfeder (13) entsprechen.

## Claims

1. An electro-pneumatic valve, in particular a pilot valve for a pneumatic multiport valve, comprising an electric coil (3) accommodated in a housing (1) and having an iron core (4) and interacting at its end with a plate armature (5) restorable via a leaf spring (13) to cause an electromagnetic stroke of at least one closure element (6) arranged between two coaxially facing valve seats (7, 8) to form a three-way, two-position multiport valve, wherein the one valve seat (8) for venting is formed at the iron core (4) equipped with a corresponding vent channel (10), and the other valve seat (7) for feeding is formed at the housing (1), wherein the valve seats (7, 8) and the closure element (6) are of a hard material, and wherein the closure element (6) interacting with the valve seats (7, 8) is formed as a separate component and is moveable with radial play with respect to the plate armature (5),
**characterised in that** the closure element (6), to execute a stroke, has its end surface adjacent to the plate armature (5) in an axial direction and the closure element (6) is guided along the stroke between the open and closed positions solely due a positive engagement with the two valve seats (7, 8).

2. An electro-pneumatic valve according to claim 1,
**characterised in that** the valve seats (7, 8) and the closure element (6) are of hardened steel.

3. An electro-pneumatic valve according to claim 2,
**characterised in that** the valve seat (8) for venting, as a separate component, is coaxially pressed into the end of the iron core (4).

4. An electro-pneumatic valve according to claim 2,
**characterised in that** the two valve seats (7, 8) have a frusto-conical form tapering toward the feeding or venting channel (10) and each interact with a convex area of the closure element (6) for guiding along the stroke between the open and closed positions in a positive engagement.

5. An electro-pneumatic valve according to claim 4,
**characterised in that** the convex area of the closure element (6) is formed by two opposite ball elements (1, 2) partially pressed therein.

6. An electro-pneumatic valve according to claim 4,
**characterised in that** the convex area of the closure element (6) is formed by ball elements partially enclosed by a cage-like recess.

7. An electro pneumatic valve according to any one of the preceding claims,
**characterised in that** the leaf spring (13) has a star-like configuration with at least three spring arms (14a-14d) and with a central through-hole (15) for an area of the plate armature (5) interacting with the iron core (4).

8. An electro-pneumatic valve according to claim 7,
**characterised in that** the leaf spring (13) has precisely four spring arms (14a-14d).

9. An electro-pneumatic valve according to claim 7 or 8,
**characterised in that** the distal ends of the spring arms (14a-14d) are inserted in corresponding recesses within the housing (1), which correspond to the thickness of the leaf spring (13).

## Revendications

1. Vanne électropneumatique, en particulier vanne pilote pour un distributeur pneumatique, comprenant une bobine électrique (3) logée dans un boîtier (1) avec un noyau (4) en fer qui coopère du côté frontal avec un induit en forme de plaque (5) susceptible d'être rappelé via un ressort plan (13) pour l'actionnement électromagnétique de la course d'au moins un élément obturateur (6) qui est agencé entre deux sièges de vanne (7, 8) coaxiaux agencés à l'opposé l'un de l'autre pour former un distributeur à trois voies/deux positions, l'un des sièges de vanne (8) étant réalisé pour la purge d'air sur un noyau en fer (4) doté d'un canal de purge d'air (10) correspondant, et l'autre le siège de vanne (7) étant réalisé dans le boîtier (1) pour la mise à l'air, lesdits sièges de vanne (7, 8) et l'élément obturateur (6) étant réalisés en un matériau dur, et l'élément obturateur (6) qui coopère avec les sièges de vanne (7, 8) est réalisé sous la forme d'un composant séparé et est déplaçable sur un jeu radial par rapport à l'induit en forme de plaque (5),
**caractérisée en ce que**, pour l'actionnement de la course, l'élément obturateur (6) s'appuie en direction axiale du côté frontal contre l'induit en forme de plaque (5), et le guidage de l'élément obturateur (6) le long de la course entre la position ouverte et la position fermée a lieu uniquement via une interaction à coopération de formes avec les deux sièges de vanne (7, 8).

2. Vanne électropneumatique selon la revendication 1,
**caractérisée en ce que** les sièges de vanne (7, 8) et l'élément obturateur (6) sont en acier durci.

3. Vanne électropneumatique selon la revendication 2,
**caractérisée en ce que** le siège de vanne (8) pour la purge d'air est réalisé sous forme de composant séparé enfoncé à la presse coaxialement et du côté frontal dans le noyau en fer (4).

4. Vanne électropneumatique selon la revendication 2,
**caractérisée en ce que** les deux sièges de vanne (7, 8) possèdent une forme en tronc de cône qui va en se rétrécissant vers le canal de mise à l'air ou de purge d'air (10), et interagissent chacun par coopération de formes avec une zone convexe de l'élément obturateur (6) pour le guidage le long de la course entre la position ouverte et la position fermée.

5. Vanne électropneumatique selon la revendication un 4,
**caractérisée en ce que** la zone convexe de l'élément obturateur (6) est formé par deux éléments sphériques opposés enfoncés partiellement dans celui-ci à la presse.

6. Vanne électropneumatique selon la revendication 4,
**caractérisée en ce que** la zone convexe de l'élément obturateur (6) est formée par des éléments sphériques partiellement enfermés par un évidement analogue à une cage.

7. Vanne électropneumatique selon l'une des revendications précédentes,
**caractérisée en ce que** le ressort plan (18) présente une conformation en étoile avec au moins trois bras de ressort (14a-14d) et est pourvu d'une traversée centrale (15) pour une zone de l'induit en forme de plaque (5) qui coopère avec le noyau en fer (4).

8. Vanne électropneumatique selon la revendication 7,
**caractérisée en ce que** le ressort plan comprend exactement quatre bras de ressort (14a-14d).

9. Vanne électropneumatique selon la revendication 7 ou 8,
**caractérisée en ce que** les extrémités distales des bras de ressort (14a-14d) sont insérées dans des évidements correspondants du côté du boîtier (1) qui correspondent à l'épaisseur du ressort plan (13).
